# EUROPEAN PATENT APPLICATION

(11) **EP 2 530 770 A1**
(43) Date of publication of application: **05.12.2012**
(21) Application number: 11734650.2
(22) Date of filing: 19.01.2011
(51) Int. Cl.: H01M 4/66, C25D 5/10, C25D 7/06, C25D 9/08

(54) **COPPER FOIL FOR SECONDARY BATTERY NEGATIVE ELECTRODE POWER COLLECTOR**

(30) Priority: 25.01.2010 JP 2010012826
(71) Applicant: JX Nippon Mining & Metals Corporation, Tokyo 100-8164 (JP)
(72) Inventor: ARAI Hideta, Hitachi-city Ibaraki 317-0056 (JP); KAMINAGA Kengo, Hitachi-city Ibaraki 317-0056 (JP); MIKI Atsushi, Hitachi-city Ibaraki 317-0056 (JP); IWASAKI Yuichi, Hitachi-city Ibaraki 317-0056 (JP)
(74) Representative: Hoarton, Lloyd Douglas Charles
(86) International application number: PCT/JP2011/050812
(87) International publication number: WO 2011/090044

(57) **Abstract**

Provided is a copper foil for a negative electrode current collector of secondary battery, wherein: roughening treatment is performed to both front and rear surfaces of a rolled copper alloy foil; an average surface roughness Ra of both the front and rear surfaces based on laser microscope measurement is 0.04 to 0.20 µm; and the ratio of surface area factor is within a range of 1.0 < (C)/(C') < 1.1, when a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'). This invention aims to provide a copper foil for a negative electrode current collector of a secondary battery in which the adhesiveness of the secondary battery active material is superior, and which can reduce the variation in the area weight of the secondary battery active material, and has superior weather resistance and thermal resistance.

## Description

### TECHNICAL FIELD

The present invention relates to a copper foil for a negative electrode current collector of secondary battery, and in particular provides a copper foil for a negative electrode current collector of a secondary battery in which the adhesiveness of the secondary battery active material is superior, and which can reduce the variation in the area weight of the secondary battery active material.

### BACKGROUND ART

A copper and copper alloy foil (hereinafter collectively referred to as a "copper foil") is contributing significantly to the development of the electric/electronic-related industry, and is indispensable as a printed circuit material or a negative electrode current collector of secondary battery. A copper foil is demanded of high adhesiveness with a resin base material and other materials. For example, in the case of a negative electrode current collector of a lithium secondary battery, adhesiveness between the copper foil and the negative electrode active material is demanded. In order to improve the adhesiveness between the copper foil and the active material of the negative electrode current collector, it is standard practice to perform surface treatment of forming irregularities on the copper foil surface in advance. For example, known are methods such as blast treatment, rolling with the use of a surface roughening roller, mechanical polishing, electrolytic polishing, chemical polishing, and formation of roughening particles based on electroplating with the use of a sulfuric acid copper plating bath (hereinafter referred to as "roughening treatment"). Among the above, roughening treatment is frequently used. Roughening treatment using a sulfuric acid copper plating bath aims to improve the adhesiveness based on the anchor effect by electrodepositing copper particles on a copper foil surface so as to form irregularities thereon (for instance, refer to Patent Document 1 and Patent Document 2).

Nevertheless, the roughening particles obtained by using a sulfuric acid copper plating bath have a problem in that the particles are uneven and the roughness degree is high due to the aggregation of enlarged roughening particles. In other words, when the roughness degree of the roughening particles is high, the anchor effect contrarily becomes weak or the copper powder falls from the portion where the roughening particles have aggregated. Accordingly, there is a problem in that sufficient adhesiveness between the copper foil for the negative electrode current collector and the active material cannot be obtained.

Moreover, in the case of a lithium secondary battery, a carbon material is generally used as the negative electrode active material. In order to obtain an even higher charging/discharging capacity, the use of an active material obtained by sputtering silicon or the like to form a thin film is being considered. Nevertheless, when silicon or the like is used as the negative electrode active material, there is a problem in that the expansion/contraction of the volume caused by the absorption/discharge of lithium ions during the charge/discharge cycle will increase and cause the active material to peel or fall, and the battery properties will thereby deteriorate. Thus, improving the adhesiveness between the copper foil as a collector and the active material, and preventing copper powder particles from falling, which is affected by the aggregation of roughening particles on the copper foil surface, are critical issues.

In addition, the level of the roughness degree and the variation in the roughness degree of the roughening particles after the copper foil was subject to roughening treatment considerably affect the amount of the active material formation. In addition, the foregoing amount of the active material formation affects the capacitance of the battery. Accordingly, in order to uniformly form an active material on both the front and rear surfaces of the copper foil, both the front and rear surfaces of the copper foil after being subject to roughening treatment desirably have the same level of surface roughness.

Meanwhile, a copper foil is broadly classified as an electrolytic copper foil or a rolled copper foil depending on the production method thereof. A general electrolytic copper foil has a rough surface side and a glossy surface side as its front and rear surfaces. The rough surface side has knobby irregularities formed from the growth of columnar crystal grains which are unique to an electrolytic copper foil, and the glossy surface side has a shape formed from the transfer of wheel marks of an electrolytic drum. Thus, the foregoing electrolytic copper foil has different surface shapes on its front and rear surfaces, and the difference in roughness of the front and rear surfaces is large. When roughening treatment is performed to the front and rear surfaces of an electrolytic copper foil, the uneven roughness of the copper foil surfaces is reflected, and causes the difference in roughness of the front and rear surfaces to increase and the variation in the roughness degree to increase, and it is thereby difficult to realize a uniform amount of formation of the negative electrode active material described above.

Meanwhile, since a rolled copper foil is produced by hot rolling an ingot, repeating cold rolling and annealing up to a predetermined thickness, and ultimately achieving a thickness of 50 µm or less in the final cold rolling process; generally speaking, the roughness on both surfaces of a rolled copper foil is small, and it is easy to reduce the variation in the roughness between the front and rear surfaces. However, when roughening treatment using a sulfuric acid copper plating bath is performed to a rolled copper foil, there is a problem in that the roughness degree increases and the variation in the roughness degree also increase due to the influence of the aggregation of the enlarged roughening particles as described above.

Thus, it is desirable to perform fine roughening treatment to achieve roughness uniformity and area weight uniformity on the front and rear surfaces of a rolled copper foil in order to improve the active material adhesiveness, but there are limits in such fine roughening treatment, and well-balanced roughening treatment is required. Thus, the current situation is that the development of a copper foil for a negative electrode current collector of secondary battery is being demanded.
[Patent Document 1] Japanese Patent No. 3742144
[Patent Document 2] Japanese Laid-Open Patent Publication No. 2002-319408

### DISCLOSURE OF INVENTION

### [Technical Problem]

An object of this invention is to provide a copper foil for a negative electrode current collector of a secondary battery in which the adhesiveness of the secondary battery active material is superior, and which can reduce the variation in the area weight of the secondary battery active material.

### [Solution to Problem]

The present invention provides:
1) A copper foil for a negative electrode current collector of secondary battery, wherein: roughening treatment is performed to both front and rear surfaces of a rolled copper or copper alloy foil; an average surface roughness Ra of both the front and rear surfaces based on laser microscope measurement is 0.04 to 0.20 µm; and when a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'), the ratio of surface area factor is within a range of 1.0 < (C)/(C') < 1.1.
2) The copper foil for a negative electrode current collector of a secondary battery according to 1) above, wherein an average diameter of roughening particles of the roughened surfaces is 0.1 to 0.4 µm.
3) The copper foil for a negative electrode current collector of a secondary battery according to 1) or 2) above, wherein the maximum height of a roughened layer is 0.2 µm or less.
4) The copper foil for a negative electrode current collector of a secondary battery according to any one of 1) to 3) above, wherein the roughening particles are formed on both front and rear surfaces of a rolled copper or copper alloy foil by plating with one element among copper, cobalt and nickel, or by alloy plating with two or more elements selected therefrom.
5) The copper foil for a negative electrode current collector of a secondary battery according to any one of 1) to 4) above, comprising a rust-proofed layer or a heat-resistant layer selected from a cobalt-nickel alloy plated layer, a zinc-nickel alloy plated layer and a chromate layer, and/or a silane coupling layer on both the front and rear surfaces, which were subject to roughening treatment, of the rolled copper or copper alloy foil.
6) The copper foil for a negative electrode current collector of a secondary battery according to any one of 1) to 5) above, wherein a area weight variation σ in a copper foil width direction of the rolled copper or copper alloy foil after both the front and rear surfaces were subject to roughening treatment is 0.5 or less.

### EFFECTS OF INVENTION

The present invention yields a superior effect of being able to provide a copper foil for a negative electrode current collector of a secondary battery in which the adhesiveness of the secondary battery active material is superior, and which can reduce the variation in the area weight of the secondary battery active material.

### BRIEF DESCRIPTION OF INVENTION

[Fig. 1] This is an SEM photograph of the roughening particles of the copper foil for a negative electrode current collector of a secondary battery of Example 1.
[Fig. 2] This is a cross section FIB-SIM photograph of the roughening particles of the copper foil for a negative electrode current collector of a secondary battery of Example 1.
[Fig. 3] This is an SEM photograph of the roughening particles of the copper foil for a negative electrode current collector of a secondary battery of Comparative Example 1.
[Fig. 4] This is a cross section FIB-SIM photograph of the roughening particles of the copper foil for a negative electrode current collector of a secondary battery of Comparative Example 1.

### DESCRIPTION OF EMBODIMENTS

The copper foil used in the present invention is a rolled copper foil or a copper alloy foil. A rolled copper foil and a copper alloy foil are superior in terms of high mechanical strength and flex resistance in comparison to an electrolytic copper foil. For use as a negative electrode current collector of a lithium secondary battery, it is possible to obtain a battery with higher capacitance by causing the copper foil thickness to be thinner, but the strength will deteriorate when the copper foil thickness is thin, and it entails the possibility of a rupture. Thus, it is desirable to use a rolled copper foil and a copper alloy foil which have higher strength than an electrolytic copper foil.

There is no particular limitation regarding the type of rolled copper foil and copper alloy foil to be used in the present invention, and the foil to be used may be suitably selected according to the usage or demanded characteristics. For example, in addition to high-purity copper (oxygen-free copper, tough pitch copper, etc.); Sn-containing copper, Ag-containing copper, or copper alloy such as Cu-Ni-Si-based copper alloy doped with Ni, Si and the like, or Cu-Cr-Zn-based copper alloy doped with Cr, Zn and the like may be used.

There is also no particular limitation regarding the thickness of the rolled copper foil and copper alloy foil, and the thickness may be suitably selected according to the usage or demanded characteristics. Generally speaking, the thickness of the copper foil which is used for a collector of the lithium secondary battery negative electrodes is roughly 5 to 20 µm.

Roughening treatment is performed to both the front and rear surfaces of the rolled copper or copper alloy foil. In addition, the average surface roughness Ra of both the front and rear surfaces of the copper foil based on laser microscope measurement is 0.04 to 0.20 µm. In this respect, it could be said that the rolled foil has extremely low surface roughness in comparison to an electrolytic copper foil.

The reason why the lower limit of the average surface roughness Ra is set to 0.04 µm is in order to form fine particles and improve the adhesiveness of the secondary battery active material. It is thereby possible to apply as much active material as possible, and improve the capacitance of the battery. Meanwhile, the reason why the upper limit is set to 0.20 µm is in order to reduce the variation in the area weight of the secondary battery active material. It is thereby possible to improve the charge/discharge properties of the secondary battery.

In addition, with the copper foil for a negative electrode current collector of secondary battery of the present invention; the ratio of surface area factor "(C)/(C')" is within a range of 1.0 < (C)/(C') < 1.1, when a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'). In order to improve the adhesiveness with the negative electrode active material as well as improve the contact area with the negative electrode active material to increase the capacitance of the battery, it is insufficient to merely cause the average surface roughness Ra to be 0.04 to 0.20 µm.

What is important in the present invention is the management of the three-dimensional surface areas (A) and (A'), and the two-dimensional areas (B) and (B') as the projected areas upon measuring the foregoing three-dimensional surface areas. This two-dimensional area as the projected area is the area when viewed planarly. In this respect, (A)/(B) = (C) and (A')/(B') = (C') can be viewed as a ratio between a three-dimensional figure and a two-dimensional figure. When this ratio (C)/(C') is 1.0 or less, the adhesiveness of the battery active material will deteriorate; and when (C) is 1.1 or more, there will be variation in the area weight of the secondary battery active material, and this will cause the battery properties (charge/discharge properties) to deteriorate.

In the present invention, refinement processing is performed to the front and rear surfaces of a rolled copper foil to achieve a uniform roughness and uniformity in the area weight of the active material.

With respect to the variation in the thickness of the secondary battery active material, for instance, if the thickness of a copper foil, which has a thickness of 18 µm, differs by 0.5 µm, a variation of 2.78% will arise relative to the copper foil thickness. When an active material having a thickness of 40 µm is applied to this copper foil, the thickness variation will correspond to 0.86% in terms of the total thickness of the copper foil and the active material. Meanwhile, if the thickness variation of a copper foil of 18 µm is 0.5% and an active material having a thickness of 40 µm is similarly applied thereon, the thickness variation will correspond to 0.155% in terms of the total thickness of the copper foil and the active material. It can be understood that the foregoing thickness variation of the copper foil considerably affects the variation in the area weight of the secondary battery active material.

Moreover, with the copper foil for a negative electrode current collector of a secondary battery of the present invention, the average diameter of the roughening particles of the roughened surfaces is desirably 0.1 to 0.4 µm. The roughening particles are desirably fine particles, and the fine particles are desirably as uniform as possible. As with the foregoing modes, these are also preferred modes for improving the adhesiveness of the battery active material and improving the capacitance of the battery by applying as much active material as possible.

In the present invention, the average diameter of the roughening particles can be controlled based on the index of 0.1 to 0.4 µm, and the foregoing index can be achieved.

Moreover, with the copper foil for a negative electrode current collector of a secondary battery of the present invention, the maximum height of the roughened layer is desirably 0.2 µm or less. This is also a preferred mode for reducing the thickness variation of the roughened layer, improving the adhesiveness of the battery active material, and improving the capacitance of the battery by applying as much active material as possible.

In the present invention, the thickness of the roughening particle layer can be controlled based on the index of 0.2 µm or less, and the foregoing index can be achieved.

With the copper foil for a negative electrode current collector of a secondary battery of the present invention, plating with one element among copper, cobalt and nickel, or alloy plating with two or more elements selected therefrom may be performed. Normally, the roughening particles are formed by the alloy plating of the three elements of copper, cobalt and nickel.

In addition, with the copper foil for a negative electrode current collector of a secondary battery of the present invention, a preferred mode is to form a rust-proofed layer or a heat-resistant layer selected from a cobalt-nickel alloy plated layer, a zinc-nickel alloy plated layer and a chromate layer, and/or a silane coupling layer on both the front and rear surfaces, which were subject to roughening treatment, of the rolled copper alloy foil in order to improve thermal resistance and weather resistance (corrosion resistance) properties.

Accordingly, with the copper foil for a negative electrode current collector of a secondary battery, the present invention can cause the area weight variation in a copper foil width direction of the rolled copper alloy foil, of which both the front and rear surfaces were subject to roughening treatment, to be 0.5% or less, and it is thereby possible to provide a superior copper foil for a negative electrode current collector of a secondary battery.

To explain the roughening treatment performed on the copper foil for a negative electrode current collector of a secondary battery of the present invention by taking copper-cobalt-nickel alloy plating as an example, the roughening treatment is performed so as to form a ternary alloy layer, via electrolytic plating, in which the plating amount of copper is 15 to 40 mg/dm², plating amount of cobalt is 100 to 3000 µg/dm², and plating amount of nickel is 100 to 500 µg/dm². This ternary alloy layer also has thermal resistance.

The general bath and plating conditions for forming the foregoing ternary copper-cobalt-nickel alloy plating are as follows.

### (Copper-cobalt-nickel alloy plating)

Cu: 10 to 20 g/liter
Co: 1 to 10 g/liter
Ni: 1 to 10 g/liter
pH: 1 to 4
Temperature: 30 to 50°C
Current Density Dₖ: 20 to 50 A/dm²
Time: 1 to 5 seconds

The present invention can form a cobalt-nickel alloy plated layer on the roughened surface after being subject to roughening treatment. With this cobalt-nickel alloy plated layer, the plating amount of cobalt is 200 to 3000 µg/dm², and the cobalt ratio is 60 to 70 mass%. In a broad sense, this treatment can be viewed as one type of rustproof treatment.

The cobalt-nickel alloy plating conditions are as follows.

### (Cobalt-nickel alloy plating)

Co: 1 to 20 g/liter
Ni: 1 to 20 g/liter
pH: 1.5 to 3.5
Temperature: 30 to 80°C
Current Density Dₖ: 1.0 to 20.0 A/dm²
Time: 0.5 to 4 seconds

The present invention can additionally form a zinc-nickel alloy plated layer on the cobalt-nickel alloy plating. The total amount of the zinc-nickel alloy plated layer is 150 to 500 µg/dm², and the nickel ratio is 16 to 40 mass%. This layer has the function as a heatproof and rustproof layer.

The zinc-nickel alloy plating conditions are as follows.

### (Zinc-nickel alloy plating)

Zn: 0 to 30 g/liter
Ni: 0 to 25 g/liter
pH: 3 to 4
Temperature: 40 to 50°C
Current Density Dₖ: 0.5 to 5 A/dm²
Time: 1 to 3 seconds

Thereafter, as needed, subsequent rustproof treatment may also be performed. Preferable rustproof treatment is independent coating treatment of chromium oxide, or mixture coating treatment of chromium oxide and zinc/zinc oxide. The foregoing mixture coating treatment of chromium oxide and zinc/zinc oxide is the treatment of using a plating bath containing zinc salt or zinc oxide and chromate and forming, via electroplating, a rustproof layer of a zinc-chromium-based mixture comprising zinc or zinc oxide and chromium oxide.

As the plating bath, representatively used may be a mixed aqueous solution containing: at least one type among bichromate such as K₂Cr₂O₇ and Na₂Cr₂O₇, CrO₃, and others; at least one type of soluble zinc salt such as ZnO and ZnSO₄•7H₂O; and alkali hydroxide. A representative plating bath composition and electrolytic conditions are as follows. The consequently obtained copper foil yields superior thermal peeling strength, oxidation resistance and hydrochloric acid resistance.

### (Chromium rustproof treatment)

K₂Cr₂O₇ (Na₂Cr₂O₇ or CrO₃): 2 to 10 g/liter
NaOH or KOH: 10 to 50 glliter
ZnO or ZnSO₄•7H₂O: 0.05 to 10 g/liter
pH: 3 to 13
Bath Temperature: 20 to 80°C
Current Density Dₖ: 0.05 to 5 A/dm²
Time: 5 to 30 seconds
Anode: Pt-Ti plate, stainless steel plate, etc.
Chromium oxide is demanded to be plated in a chromium content of 15 µg/dm² or more, and zinc is demanded to be plated in an amount of 30 µg/dm² or more.

Finally, aiming to improve the adhesiveness between the copper foil and the resin substrate, silane treatment of applying a silane coupling agent on at least the roughened surface on the rustproof layer is performed as needed. As the silane coupling agent to be used in the foregoing silane treatment, olefinic silane, epoxy-based silane, acrylic silane, amino-based silane, mercapto-based silane or the like may be suitably selected and used.

As the application method, the silane coupling agent solution may be sprayed, applied with a coater, applied via dipping, or applied via flow coating. For example, Japanese Patent Publication No. S60-15654 describes that the adhesion of the copper foil and the resin substrate is improved by performing chromate treatment to the rough surface side of the copper foil, and thereafter performing silane coupling agent treatment. Please refer to the foregoing document for details. Thereafter, as needed, annealing treatment may also be performed in order to improve the ductility of the copper foil.

### [Examples]

The present invention is now explained with reference to the Examples and Comparative Examples. Note that these Examples are merely illustrative, and the present invention is not limited only to these Examples. In other words, the present invention covers all other modes or modifications included in this invention.

By performing roughening treatment to a rolled copper alloy foil based on copper-cobalt-nickel alloy plating within the terms of the following conditions, copper of 17 mg/dm², cobalt of 2000 µg/dm², and nickel of 500 µg/dm² were plated. The roughened copper foil was thereafter water washed, and a cobalt-nickel alloy plated layer was formed thereon. Here, the cobalt plating amount was 800 to 1400 µg/dm², and the nickel plating amount was 400 to 600 µg/dm². After additionally forming a zinc-nickel alloy plated layer, a silane coupling agent was applied and dried.

The used bath composition and plating conditions were as follows.

### [Bath composition and plating conditions]

### (1) Roughening treatment (Cu-Co-Ni alloy plating)

Cu: 15 g/liter
Co: 8.5 g/liter
Ni: 8.6 g/liter
pH: 2.5
Temperature: 38°C
Current Density Dₖ: 20 A/dm²
Time: 2 seconds
Copper plating amount: 17 mg/dm²
Cobalt plating amount: 2000 µg/dm²
Nickel plating amount: 500 µg/dm²

Under the foregoing conditions, formed was a copper foil for a negative electrode current collector of secondary battery; wherein the ratio of surface area factor "(C)/(C')" is within a range of 1.0 < (C)/(C') < 1.1, when a three-dimensional surface area upon measuring both the front and rear surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C').

### (Example 1)

In Example 1, the average surface roughness Ra of both the front and rear surfaces based on laser microscope measurement was 0.07 µm. When a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'); (C)/(C') was 1.004.

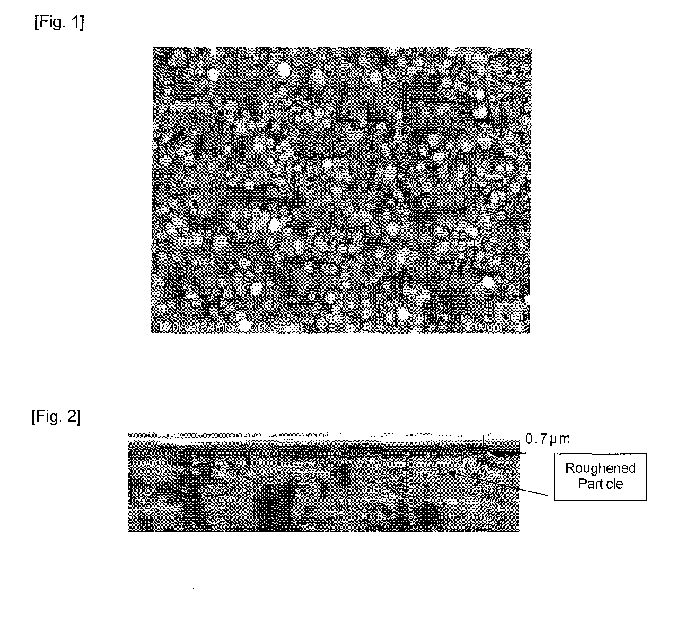

The SEM photograph (x20000) of the roughening particles in the foregoing case is shown in Fig. 1. As shown in Fig. 1, fine and uniform particles were formed. Moreover, the average diameter of the roughening particles of the roughened surfaces was 0.1 to 0.4 µm, and the variation in area weight was < 0.5 (σ).
Moreover, the cross section FIB-SIM photograph of the roughening particle layer is shown in Fig. 2. As shown in Fig. 2, the maximum height of the roughened layer was 0.2 µm, and was within the preferred range of 0.2 µm or less.

Moreover, this copper foil for a negative electrode current collector of secondary battery was used to examine the adhesiveness of the active material. Foremost, 11 wt% of polyvinylidene fluoride and 97 wt% of N methyl-2-pyrrolidone were respectively added as a thickening agent to artificial graphite as the negative electrode active material to prepare a slurry. The foregoing slurry was applied on the roughened surface of the copper foil for a negative electrode current collector with a doctor blade to achieve a uniform thickness. After drying and press-molding the foregoing copper foil, the copper foil was cut into a size of 1 cm wide × 8 cm long so as to prepare a sample for evaluating the active material adhesiveness. The adhesive strength was evaluated by affixing an adhesive tape to the foregoing sample and then measuring the peeling strength upon peeling the adhesive tape in a 90-degree direction. With respect to the evaluation of the active material adhesiveness, the adhesiveness was favorable.

Moreover, this copper foil for a negative electrode current collector of secondary battery was used to evaluate the falling (powder fall) of the roughening particles. The powder fall was evaluated by affixing a Scotch tape to the roughened surface of the copper foil for a negative electrode current collector, thereafter peeling the Scotch tape. If the Scotch tape had discolored as a result of subsequently affixing the roughening particles on the adhesive surface of the Scotch tape, this was evaluated as ×, and if no tape discoloration could be observed, this was evaluated as O. The powder fall was evaluated as O in Example 1. The foregoing results are shown in Table 1.

**[Table 1]**

| | | Roughness | Ratio of surface area factor | Roughened particle size | Maximum height of roughened layer | Variation in mass thickness | Adhesion | Powder fall of roughening particles |
|---|---|---|---|---|---|---|---|---|
| | | Ra(µm) | (C)/(C') | µm | µm | σ | kg/cm | |
| Example 1 | CuCoNi roughening | 0 06 | 1.004 | 0.1 to 0.4 | 0.2 | <0 5 | 0.30 | ○ |
| Example 2 | CuCoNi roughening | 0.07 | 1.05 | 0.1 to 0 4 | 0.2 | <0.5 | 0.31 | ○ |
| Example 3 | CuCoNi roughening | 0 15 | 1.03 | 0.1 to 0.4 | 0.2 | <0.5 | 030 | ○ |
| Comparative Example 1 | Copper sulfate roughening | 0.61 | 1 38 | 0 5 to 1.5 | 3 | 1.2 | 0.25 | × |
| Comparative Example 2 | Coppersulfate roughening | 0.27 | 1.15 | 0.5 to 1.5 | 1 4 | 0.7 | 0.27 | ○ |
| Comparative Example 3 | CuCoNi roughening | 0 27 | 1.09 | 0.1 to 0.4 | 1 | 0.6 | 0.27 | × |
| Comparative Example 4 | Rolled copper foil (untreated) | 0.05 | 1 | - | - | - | unmeasurable | - |

### (Example 2)

In Example 2, the average surface roughness Ra of both the front and rear surfaces based on laser microscope measurement was 0.07 µm. When a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'); (C)/(C') was 1.05.

Moreover, the average diameter of the roughening particles of the roughened surfaces was 0.1 to 0.4 µm, and the variation in area weight was < 0.5 (σ). Furthermore, the maximum height of the roughened layer was 0.2 µm, and was within the preferred range of 0.2 µm or less. Moreover, this copper foil for a negative electrode current collector of secondary battery was used to examine the adhesiveness of the active material, and the adhesiveness was favorable. Furthermore, this copper foil for a negative electrode current collector of secondary battery was used to evaluate the powder fall of the roughening particles, and the powder fall was evaluated as O. The results are also shown in Table 1.

### (Example 3)

In Example 3, the average surface roughness Ra of both the front and rear surfaces based on laser microscope measurement was 0.15 µm. When a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'); (C)/(C') was 1.03.

Moreover, the average diameter of the roughening particles of the roughened surfaces was 0.1 to 0.4 µm, and the variation in area weight was < 0.5 (σ). Furthermore, the maximum height of the roughened layer was 0.2 µm, and was within the preferred range of 0.2 µm or less. Moreover, this copper foil for a negative electrode current collector of secondary battery was used to examine the adhesiveness of the active material, and the adhesiveness was favorable. Furthermore, this copper foil for a negative electrode current collector of secondary battery was used to evaluate the powder fall of the roughening particles, and the powder fall was evaluated as O. The results are also shown in Table 1.

The sulfuric acid copper plating conditions were used to prepare Comparative Examples 1 and 2. The sulfuric acid copper plating conditions were as follows.

### Copper roughening treatment

Cu: 10 to 25 g/L
H₂SO₄: 20 to 100 g/L
Temperature: 20 to 40°C
Dk: 30 to 70 A/dm²
Time: 1 to 5 seconds

In addition, by using the same plating conditions as the foregoing Examples, as shown in following Comparative Example 3, formed was a copper foil for a negative electrode current collector of secondary battery, wherein: the average surface roughness Ra of both the front and rear surfaces based on laser microscope measurement deviated from 0.04 to 0.20 µm; and when a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'), the ratio of surface area factor deviated from the range of 1.0 < (C)/(C') < 1.1.

### (Comparative Example 1)

In Comparative Example 1, the average surface roughness Ra of both the front and rear surfaces based on laser microscope measurement was 0.61 µm. When a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'); (C)/(C') was 1.38. Both results deviated from the scope of the present invention.

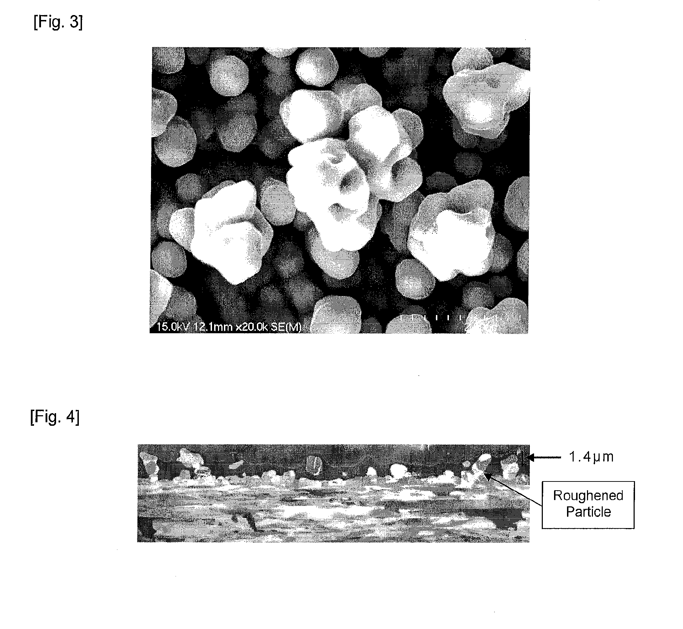

The SEM photograph (x10000) of the roughening particles in the foregoing case is shown in Fig. 3. As shown in Fig. 3, coarse and uneven particles were formed. Moreover, the average diameter of the roughening particles of the roughened surfaces was 0.5 to 1.5 µm, and the variation σ in area weight was 1.2.

Moreover, the maximum height of the roughened layer was 3 µm, and did not fall within the preferred range of 0.2 µm or less. In addition, this copper foil for a negative electrode current collector of secondary battery was used to examine the adhesiveness of the active material, and the adhesiveness was inferior. Furthermore, this copper foil for a negative electrode current collector of secondary battery was used to evaluate the powder fall of the roughening particles, and the powder fall was evaluated as ×. The results are also shown in Table 1.

### (Comparative Example 2)

In Comparative Example 2, the average surface roughness Ra of both the front and rear surfaces based on laser microscope measurement was 0.27 µm, and deviated from the scope of the present invention. Moreover, when a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'); (C)/(C') was 1.15, and deviated from the scope of the present invention.

The roughening particles were coarse, and uneven particles were formed. Moreover, the average diameter of the roughening particles of the roughened surfaces was 0.5 to 1.5 µm, and the variation σ in area weight was 0.7.

Moreover, the maximum height of the roughened layer was 1.4 µm, and did not fall within the preferred range of 0.2 µm or less. In addition, this copper foil for a negative electrode current collector of secondary battery was used to examine the adhesiveness of the active material, and the adhesiveness was inferior. Furthermore, this copper foil for a negative electrode current collector of secondary battery was used to evaluate the powder fall of the roughening particles, and the powder fall was evaluated as O. The results are also shown in Table 1.

### (Comparative Example 3)

In Comparative Example 3, the average surface roughness Ra of both the front and rear surfaces based on laser microscope measurement was 0.27 µm, and deviated from the scope of the present invention. Moreover, when a three-dimensional surface area upon measuring the roughened surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'); (C)/(C') was 1.09, and was within the scope of the present invention.

Uniform roughening particles were formed. Moreover, the average diameter of the roughening particles of the roughened surfaces was 0.1 to 0.4 µm, and the variation σ in area weight was 0.6.

Moreover, the maximum height of the roughened layer was 1.0 µm, and did not fall within the preferred range of 0.2 µm or less. In addition, this copper foil for a negative electrode current collector of secondary battery was used to examine the adhesiveness of the active material, and the adhesiveness was inferior. Furthermore, this copper foil for a negative electrode current collector of secondary battery was used to evaluate the powder fall of the roughening particles, and the powder fall was evaluated as ×. The results are also shown in Table 1.

### (Comparative Example 4)

Shown is an example where roughening treatment was not performed to the rolled copper foil (untreated). The roughness Ra was 0.05 µm, and (C)/(C') was 1. The adhesiveness in this case was immeasurable as shown in Table 1, and was inferior. It can be understood that, if this rolled copper foil is used as is, it is not suitable as a material for improving the adhesiveness of the secondary battery active material.

### INDUSTRIAL APPLICABILITY

A copper foil for a negative electrode current collector of a secondary battery of the present invention is superior in adhesiveness of the secondary battery active material, has a superior effect of reducing the variation in the area weight of the secondary battery active material, and also has superior weather resistance and thermal resistance. Therefore, the present invention is effective as a copper foil for a negative electrode current collector of secondary battery.

## Claims

1. A copper foil for a negative electrode current collector of secondary battery, wherein:
roughening treatment is performed to both front and rear surfaces of a rolled copper alloy foil; and
when a three-dimensional surface area upon measuring both the front and rear surfaces with a laser microscope is (A), a two-dimensional area as a projected area upon measuring the three-dimensional surface area is (B), and a calculated value of (A)/(B) is expressed in (C), and when a three-dimensional surface area upon measuring the surfaces of a non-roughened rolled copper or copper alloy foil with a laser microscope is (A'), a two-dimensional area as a projected area upon measuring the three-dimensional surface area is (B'), and a calculated value of (A')/(B') is expressed in (C'), the ratio of surface area factor is within a range of 1.0 < (C)/(C') < 1.1.

2. The copper foil for a negative electrode current collector of a secondary battery according to claim 1, wherein an average diameter of roughening particles of the roughened surfaces is 0.1 to 0.4 µm.

3. The copper foil for a negative electrode current collector of a secondary battery according to claim 1 or claim 2, wherein the maximum height of a roughened layer is 0.2 µm or less.

4. The copper foil for a negative electrode current collector of a secondary battery according to any one of claims 1 to 3, wherein the roughening particles are formed on both front and rear surfaces of a rolled copper or copper alloy foil by plating with one element among copper, cobalt and nickel, or by alloy plating with two or more elements selected therefrom.

5. The copper foil for a negative electrode current collector of a secondary battery according to any one of claims 1 to 4, comprising a rust-proofed layer or a heat-resistant layer selected from a cobalt-nickel alloy plated layer, a zinc-nickel alloy plated layer and a chromate layer, and/or a silane coupling layer on both the front and rear surfaces, which were subject to roughening treatment, of the rolled copper or copper alloy foil.

6. The copper foil for a negative electrode current collector of a secondary battery according to any one of claims 1 to 5, wherein a area weight variation σ in a copper foil width direction of the rolled copper or copper alloy foil after both the front and rear surfaces were subject to roughening treatment is 0.5 or less.
